# EUROPEAN PATENT SPECIFICATION

(11) **EP 3 726 326 B1**
(45) Date of publication and mention of the grant of the patent: **18.02.2026**
(21) Application number: 18887242.8
(22) Date of filing: 13.12.2018
(51) Int. Cl.: G05D 1/00, B60W 30/12, B60W 30/18, B60W 60/00

(54) **LATERAL CONTROL METHOD FOR AN AUTOMATIC DRIVING SYSTEM**
SEITLICHES STEUERUNGSVERFAHREN FÜR EIN AUTOMATISCHES FAHRSYSTEM
PROCÉDÉ DE CONDUITE LATÉRALE POUR UN SYSTÈME DE CONDUITE AUTOMATIQUE

(30) Priority: 15.12.2017 CN 201711347304
(43) Date of publication of application: 21.10.2020
(73) Proprietor: NIO (Anhui) Holding Co., Ltd., Hefei City, Anhui Province (CN)
(72) Inventor: LI, Junhua, Central Hong Kong (CN)
(74) Representative: v. Bezold & Partner Patentanwälte - PartG mbB
(86) International application number: PCT/CN2018/120940
(87) International publication number: WO 2019/114796

(56) References cited:
- WO-A1-2016/178335
- CN-A- 106 125 731
- CN-A- 106 218 637
- CN-A- 106 527 452
- CN-A- 106 598 053
- CN-A- 106 681 319
- CN-A- 108 572 642
- DE-A1- 102006 058 413
- US-A1- 2017 329 340
- BENOIT VANHOLME: "Highly Automated Driving on Highways based on Legal Safety", 18 June 2012 (2012-06-18), XP055465329, Retrieved from the Internet <URL:https://pdfs.semanticscholar.org/adb1/eea96ddd62570aa2339cb426971909ddbe5a.pdf> [retrieved on 20180406]

## Description

### Technical Field

The invention relates to the technical field of vehicle intelligent driving, and in particular to a lateral control method of an autonomous driving system.

### Background Art

An important application of artificial intelligence technology in automobiles is embodied as automatic driving technology, which is more and more concerned by people and has a very good application prospect. In order to realize automatic driving, a large amount of data information needs to be collected and acquired for processing and analysis, so that lateral control and longitudinal control structures are finally output.

The lateral control of automatic driving is one of key steps to realize fully automatic driving. The current lateral control technology of automatic driving mostly stays in lane departure warning (LDW) and lane keeping assist (LKA) stages, and it is difficult to achieve the functions of lane keeping support (LKS) and automatic lane change, especially difficult to achieve automatic lane change control during overtaking. In addition, in order to realize lane change for vehicles, a driver generally needs to manually confirm whether a lane change condition is met, and triggers the lane change through a turn light. Therefore, the automation driving degree of an automatic driving system is limited.

Further, the prior art comprises WO 2016/178335 A1, DE 10 2006 058413 A1 and Benoit Vanholme: "Highly automated driving on highways based on legal safety", 18. June 2012, XP055465329.

### Summary of the Invention

An object of the invention is to improve the automation degree of an automatic driving system in terms of lateral control.

The invention is defined by the independent claim.

In the lateral control method according to the invention, in the step of determining whether the overtaking condition is satisfied, whether the overtaking condition is satisfied is further determined based on third speed information of the coming vehicle and/or fourth speed information of the vehicle behind.

In the lateral control method according to an embodiment of the invention, further comprised is a step of: calculating a corresponding target steering angle and/or target steering torque when the corresponding neighbouring lane is selected as the target lane.

In the lateral control method according to an embodiment of the invention, a corresponding turn light trigger signal is output when the corresponding neighbouring lane is selected as the target lane.

In the lateral control method according to an embodiment of the invention, further comprised is a step of:
selecting the current lane as the target lane when the overtaking condition is not satisfied; and
outputting the target steering angle and/or target steering torque for keeping running in the current lane when the current lane is selected as the target lane.

In the lateral control method according to an embodiment of the invention, the corresponding target steering angle and/or target steering torque is output according to lane line information of the current lane when running in the current lane is kept, in the step of outputting the target steering angle and/or target steering torque for keeping running in the current lane.

In the lateral control method according to an embodiment of the invention, further comprised is a step of: outputting a corresponding signal to trigger the outputting of an alarm signal when running in the current lane is kept and neither of left and right lane lines of the current lane exists.

In the lateral control method according to an embodiment of the invention, the step of outputting the target steering angle and/or target steering torque for keeping running in the current lane comprises:
outputting the corresponding target steering angle and/or target steering torque when running in the current lane is kept and both left and right lane lines of the current lane exist such that the host vehicle runs centrally along the current lane; and/or
outputting the corresponding target steering angle and/or target steering torque when running in the current lane is kept and one of left and right lane lines of the current lane does not exist such that the host vehicle runs along the current lane on the side where the lane line exists.

In the lateral control method according to an embodiment of the invention, a corresponding lane departure warning signal is outputted if the host vehicle approximately departs from the central position between the left and right lane lines of the current lane as the host vehicle runs centrally along the current lane.

In the lateral control method according to an embodiment of the invention, further comprised is a step of: determining whether there is the vehicle ahead in front of the host vehicle, and if it is determined that there is the vehicle ahead, obtaining the first speed information and the second speed information, and/or third speed information of the coming vehicle and fourth speed information of the vehicle behind.

In the lateral control method according to an embodiment of the invention, in the step of determining whether the overtaking condition is satisfied, it is determined that the overtaking condition is satisfied at least when left and right lane lines of the neighbouring lane are clearly visible and distance information of the coming vehicle is greater than or equal to a corresponding predetermined value and/or distance information of the vehicle behind is greater than or equal to a corresponding predetermined value, otherwise it is determined that the overtaking condition is not satisfied.

In the lateral control method according to an embodiment of the invention, in the step of determining whether the overtaking condition is satisfied, it is determined that the overtaking condition is satisfied at least when left and right lane lines of the neighbouring lane are clearly visible, distance information of the coming vehicle is greater than or equal to a corresponding predetermined value and a magnitude of velocity and an acceleration of the third speed information of the coming vehicle are both less than or equal to corresponding predetermined values, and distance information of the vehicle behind is greater than or equal to a corresponding predetermined value and a magnitude of velocity and an acceleration of the fourth speed information of the vehicle behind are both less than or equal to corresponding predetermined values, otherwise it is determined that the overtaking condition is not satisfied.

In the lateral control method according to an embodiment of the invention, determining whether there is an overtaking requirement for the coming vehicle based on the distance information of the host vehicle relative to a vehicle behind which is running in the same direction as the host vehicle and/or speed information of the vehicle behind relative to the host vehicle, and generating a warning signal indicating that a vehicle is coming from behind if it is determined that there is an overtaking requirement.

In the lateral control method according to an embodiment of the invention, it is determined that there is an overtaking requirement for the coming vehicle at least when the distance information of the host vehicle relative to the vehicle behind is less than or equal to a corresponding predetermined value, and a magnitude of velocity of fourth speed information of the vehicle behind is greater than or equal to a magnitude of velocity of the first speed information of the host vehicle or an acceleration of the fourth speed information of the vehicle behind is greater than an acceleration of the first speed information of the host vehicle by a corresponding predetermined value.

In the lateral control method according to an embodiment of the invention, the first speed information, the second speed information, the third speed information and the fourth speed information all include a magnitude of velocity and an acceleration.

According to a third aspect of the invention, provided is a computer device, comprising a memory, a processor, and a computer program stored on the memory and executable on the processor, wherein the processor implements the steps of a lateral control method according to any one of the above embodiments when executing the program.

According to a fourth aspect of the invention, provided is a computer-readable storage medium having a computer program stored thereon, wherein the program is executed by a processor to implement the steps of a lateral control method according to any one of the above embodiments.

According to a fifth aspect of the invention, provided is a vehicle using an automatic driving system according to any one of the above embodiments.

The foregoing features and operations of the invention will become more obvious according to the following descriptions and the accompanying drawings.

### Brief Description of the Drawings

The above-mentioned and other objects and advantages of the invention will be more thorough and clearer from the following detailed description in conjunction with the drawings, wherein the same or similar elements are represented by the same numerals.
Fig. 1 is a structural schematic diagram of modules of an automatic driving system according to an embodiment of the invention.
Fig. 2 is a flowchart of a lateral control method of an automatic driving system according to an embodiment of the invention.
Fig. 3 is a flowchart of a lateral control method of an automatic driving system according to another embodiment of the invention.

### Detailed Description of Embodiments

The following is the description of exemplary embodiments of the invention, and examples of these embodiments are illustrated in the drawings.

For the sake of brevity and illustrative purposes, this document mainly describes the principles of the invention with reference to its exemplary embodiments. In the following description, reference is made to the accompanying drawings, which illustrate specific exemplary embodiments.

Some block diagrams shown in the accompanying drawings are functional entities that do not necessarily correspond to physically or logically independent entities. These functional entities may be implemented as software, one or more hardware modules or integrated circuits, or different networks and/or processor apparatuses and/or micro-controller apparatuses.

The invention is described below with reference to flowchart descriptions, block diagrams and/or flowcharts of methods, systems and devices according to embodiments of the invention. It will be understood that these flowchart descriptions and/or each block of the block diagrams, and the combination of the flowchart descriptions and/or the block diagrams, can be implemented by computer program instructions. These computer program instructions can be provided to a processor of a general-purpose computer, a special-purpose computer, or other programmable data processing device to form a machine such that these instructions executed by the processor of the computer or other programmable data processing device are created for components of implementing the functions/operations specified in these flowcharts and/or blocks and/or one or more flow block diagrams.

These computer program instructions can be stored in a computer-readable memory. These instructions may instruct the computer or another programmable processor to implement the functions in a specific manner, so that these instructions stored in the computer-readable memory constitute a production product containing instruction components of implementing the functions/operations specified in the flowcharts and/or one or more blocks of the block diagrams.

These computer program instructions can be loaded onto the computer or other programmable data processor such that a series of operating steps are executed on the computer or other programmable processor to constitute a computer-implemented process, so that these instructions executed on the computer or another programmable data processor provide the steps of implementing the functions/operations specified in the flowcharts and/or one or more blocks of the block diagrams. It should also be noted that in some alternative implementations, the functions/operations shown in the blocks may not occur in the order shown in the flowchart. For example, two blocks shown in sequence may actually be executed almost simultaneously or these blocks may sometimes be executed in reverse order, specifically depending on the functions/operations involved.

In this document, a vehicle equipped with an automatic driving system is referred to as "host vehicle", which may be an electric vehicle, for example.

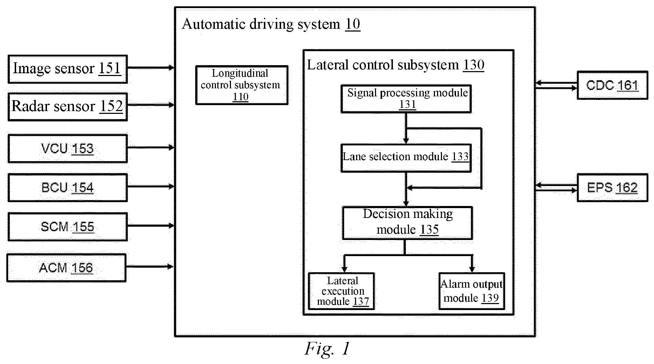

Fig. 1 shows a structural schematic diagram of modules of an automatic driving system according to an embodiment of the invention. The automatic driving system 10 may be, for example, an advanced driver assistant system (ADAS). The automatic driving system 10 comprises a longitudinal control subsystem 110 and a lateral control subsystem 130, and the following main examples illustrate the lateral control subsystem 140 of the invention.

In the process, such as lateral control, of the automatic driving system 10, a large amount of data is required to support the realization of its automatic driving function. Therefore, the automatic driving system 10 can collect or gather corresponding required data from various components installed on the host vehicle. Illustratively, the host vehicle may be equipped with one or more of the following components: an image sensor 151, a radar sensor 152, a VCU (Vehicle Control Unit) 153, a BCU (Brake Control Unit) 154, a SCM (Steering Column Unit) 155, an ACM (Airbag Control Unit) 156, a CDC (Cockpit Domain Controller) 161, an EPS (Electric Power Steering) 162. The automatic driving system 10 may be connected to the image sensor 151, the radar sensor 152, the VCU 153, the BCU 154, the SCM 155, the ACM 156, the CDC 161, the EPS 162, and other sensors, actuators or controllers by means of a CAN bus, for example, to facilitate information exchange. It should be understood that the components installed on the host vehicle are not limited to the above examples, and according to the lateral control requirements of the automatic driving system 10, the corresponding components (such as sensors) can be selected and arranged.

Continuing with what is shown in Fig. 1, the automatic driving system 10 can obtain various information such as roads, signposts, information of other vehicles (for example, speed information such as a magnitude of velocity and an acceleration), lane information of roads, lane lines of lanes, and distance information of the vehicles in real time by means of various sensors such as the image sensor 151 and the radar sensor 152 or the combination of the sensors, and can obtain in real time, by means of one or more of the VCU 153, the BCU 154, the SCM 155, the ACM 156, the CDC 161 and the EPS 162, speed information (for example, speed information such as magnitude of velocity and acceleration), acceleration, gear, steering, mode selection, fault, and other information of the host vehicle. The automatic driving system 10 may also be based on the alarm of the CDC 161, the current activation mode, the lane and other information, so that a driver can always know the working state of the vehicle and conduct information exchange with the vehicle. When the vehicle lateral control subsystem 130 of the automatic driving system 10 outputs a target steering angle or a target steering torque request to an actuator such as the EPS 162 to thus control the steering of the host vehicle to replace the manual steering of the driver.

As shown in Fig. 1, the automatic driving system 10 is internally provided with a signal processing module 131, which can gain data or signal data obtained by the automatic driving system 10 from any of the components of the host vehicle. Illustratively, speed information V1 of the host vehicle such as magnitude of velocity and acceleration can be obtained; for example, speed information V2 and distance information L2 of a vehicle ahead (if any) which is running in front of the host vehicle in the same direction can also be obtained; for example, distance information L3 of a coming vehicle which is running in an opposite direction to the host vehicle and/or speed information V3 of the coming vehicle, and distance information L4 of a vehicle behind which is running in the same direction of the host vehicle and/or speed information V4 of the vehicle behind can also be obtained; for example, information of left and right lane lines of the current lane can also be obtained; and lane line information of a neighbouring lane of the vehicle ahead can also be obtained. The way they are obtained is not restrictive.

The signal processing module 131 can determine whether there is an overtaking requirement at least according to the speed information V1 of the host vehicle and the speed information V2 of a vehicle ahead which is running in front of the host vehicle in the same direction (especially a vehicle which is running directly in front of the host vehicle in the same direction, or a vehicle in the same lane). Specifically, corresponding predetermined overtaking requirement conditions can be set according to parameters such as the speed information V1 and V2 and the distance information L2 between the host vehicle and the vehicle ahead, so that whether overtaking is required can be determined based on the predetermined overtaking requirement conditions. For example, if the speed of the vehicle ahead is lower than a certain threshold value and the speed of the host vehicle is greater than a certain threshold value, or the speed of the vehicle ahead relative to the host vehicle is lower than a certain threshold value, overtaking is considered to be required. The setting of the predetermined overtaking requirement conditions is to reflect the driver's overtaking requirement as accurately as possible, and the specific setting is not restrictive.

The signal processing module 131 is also used for determining whether there is a vehicle ahead in front of the host vehicle, and if it is determined that there is the vehicle ahead, obtaining the speed information V1 and the second speed information V2 and/or the speed information V3 of the coming vehicle and even the speed information V4 of the vehicle behind. Illustratively, it can be determined that there is the vehicle ahead if the distance information L2 mentioned above is less than 10-50 m. It should be understood that the vehicle ahead of the host vehicle in this document is a vehicle which is adjacent to the host vehicle and is running substantially in front of the host vehicle in the same direction, and if the distance between the host vehicle and the vehicle ahead is less than or equal to the corresponding value, it can be understood that there is the vehicle ahead with the possibility of overtaking.

Specifically, the signal processing module 131 can be implemented by, for example, a processor, which may also perform various signal processing such as filtering, validity judgment, and fault diagnosis on an input signal.

Continuing with what is shown in Fig. 1, the lateral control subsystem 130 is also internally provided with a lane selection module 133, wherein the lane selection module 133 is used for determining, when it is determined that there is the overtaking requirement, whether an overtaking condition is satisfied based on lane line information of a neighbouring lane of the vehicle ahead, and distance information L3 of the host vehicle relative to a coming vehicle which is running in an opposite direction to the host vehicle and/or the distance information L4 of the host vehicle relative to a vehicle behind which is running in the same direction as the host vehicle, and selecting a corresponding neighbouring lane as a target lane when the overtaking condition is satisfied. According to the invention, if the left and right lane lines of the neighbouring lane are invisible or partially missing, which indicates that the neighbouring lane is incomplete or the neighbouring lane is partially occupied by the vehicle ahead, it is determined that the overtaking condition is not satisfied. In another example, when there is no vehicle behind, for example, only if the lane line information of the neighbouring lane is clearly visible and the distance information L3 of the host vehicle relative to the coming vehicle is greater than or equal to the corresponding predetermined value, it is determined that the overtaking condition is satisfied, and if any of the above conditions is not satisfied, it is determined that the overtaking condition is not satisfied. In yet another example, when a two-way lane is separated by an interval band (at this time, the coming vehicle may not be considered), for example, only if the lane line information of the neighbouring lane is clearly visible and the distance information L4 of the host vehicle relative to the vehicle behind is greater than or equal to the corresponding predetermined value, it is determined that the overtaking condition is satisfied, and if any of the above conditions is not satisfied, it is determined that the overtaking condition is not satisfied. In still another example, when there is the vehicle behind and a two-way lane is not separated by an interval band, for example, only if the lane line information of the neighbouring lane is clearly visible, the distance information L3 of the host vehicle relative to the coming vehicle is greater than or equal to the corresponding predetermined value, and the distance information L4 of the host vehicle relative to the vehicle behind is greater than or equal to the corresponding predetermined value, it is determined that the overtaking condition is satisfied, and if any of the above conditions is not satisfied, it is determined that the overtaking condition is not satisfied.

The lateral control subsystem 130 might also be internally provided with a lane selection module 133, wherein the lane selection module 133 is used for determining, when it is determined that there is the overtaking requirement, whether an overtaking condition is satisfied based on lane line information of a neighbouring lane of the vehicle ahead, the distance information L3 of the coming vehicle (a coming vehicle which is running in an opposite direction to the host vehicle) and speed information V3 thereof, and/or the distance information L4 of the vehicle behind (a vehicle behind which is running in the same direction as the host vehicle) and speed information V4 thereof, and selecting a corresponding neighbouring lane as a target lane when the overtaking condition is satisfied. In an example, when there is no vehicle behind, for example, only if the lane line information of the neighbouring lane is clearly visible, the distance information L3 of the host vehicle relative to the coming vehicle is greater than or equal to the corresponding predetermined value, and magnitude of velocity of the speed information V3 of the coming vehicle is less than or equal to the corresponding predetermined value, it is determined that the overtaking condition is satisfied, and if any of the above conditions is not satisfied, it is determined that the overtaking condition is not satisfied. In an example, when there is no vehicle behind, for example, only if the lane line information of the neighbouring lane is clearly visible, the distance information L3 of the host vehicle relative to the coming vehicle is greater than or equal to the corresponding predetermined value, and magnitude of velocity and acceleration of the speed information V3 of the coming vehicle are respectively less than or equal to the corresponding predetermined value, it is determined that the overtaking condition is satisfied, and if any of the above conditions is not satisfied, it is determined that the overtaking condition is not satisfied. In another example, when a two-way lane is separated by an interval band (at this time, the coming vehicle may not be considered), for example, only if the lane line information of the neighbouring lane of the vehicle ahead is clearly visible, the distance information L4 of the host vehicle relative to the vehicle behind is greater than or equal to the corresponding predetermined value, and magnitude of velocity and acceleration of the speed information V4 of the vehicle behind are respectively less than or equal to the corresponding predetermined value, it is determined that the overtaking condition is satisfied, and if any of the above conditions is not satisfied, it is determined that the overtaking condition is not satisfied. In yet another example, when there is the vehicle behind and a two-way lane is not separated by an interval band, for example, only if the lane line information of the neighbouring lane is clearly visible, the distance information L3 of the host vehicle relative to the coming vehicle is greater than or equal to the corresponding predetermined value, magnitude of velocity of the speed information V3 of the coming vehicle is less than or equal to the corresponding predetermined value, acceleration of the speed information V3 of the coming vehicle is less than or equal to the corresponding predetermined value, the distance information L4 of the host vehicle relative to the vehicle behind is greater than or equal to the corresponding predetermined value, magnitude of velocity of the speed information V4 of the vehicle behind is less than or equal to the corresponding predetermined value, acceleration of the speed information V4 of the coming vehicle is less than or equal to the corresponding predetermined value, it is determined that the overtaking condition is satisfied, and if any of the above conditions is not satisfied, it is determined that the overtaking condition is not satisfied.

In another embodiment, the lane selection module 133 is also used for determining whether there is an overtaking requirement for the corresponding coming vehicle based on the distance information L4 of the host vehicle relative to a vehicle behind which is running in the same direction as the host vehicle and/or speed information of the vehicle behind relative to the host vehicle, and triggering to generate a warning signal indicating that a vehicle is coming from behind if it is determined that there is an overtaking requirement. The warning signal indicating that a vehicle is coming from behind can be sent to an alarm output module 139. In an example, it is determined that there is an overtaking requirement for the coming vehicle, if the distance information L4 of the host vehicle relative to the vehicle behind is less than a corresponding predetermined value, and magnitude of velocity of the speed information V4 of the vehicle behind is greater than or equal to the magnitude of velocity of the speed information V1 of the host vehicle, or acceleration of the speed information V4 of the vehicle behind is greater than acceleration of the speed information V1 of the host vehicle by the corresponding predetermined value. In this case, regardless of whether there is an overtaking requirement for the host vehicle, it is triggered to output the warning signal indicating that a vehicle is coming from behind. In this way, the alarm output module 139 reminds the driver of paying attention to the safety of the coming vehicle in a timely manner.

It should be understood that the specific setting of overtaking conditions is not limited to the above examples. The lane selection module 133 selects the current lane (that is, the current driving lane, which may be the lane where the host vehicle and the vehicle ahead travel together) when it is determined that the overtaking condition is not satisfied, such as making the choice to stay in the current lane.

The lane selection module 133 can relatively accurately determine whether the overtaking condition is satisfied, avoiding a dangerous accident when automatic lateral control is applied to overtaking.

Continuing with what is shown in Fig. 1 the lateral control subsystem 130 might also be internally provided with a decision making module 135, which decision making module 135 can be connected to or coupled to the lane selection module 133 and the signal processing module 131, and an output result of the lane selection module 133 and an output result of the signal processing module 131 can be optionally sent to the decision making module 135. The decision making module 135 can calculate the corresponding target steering angle and/or target steering torque when the corresponding neighbouring lane is selected as the target lane (such as receiving from the lane selection module 133 an instruction to select the corresponding neighbouring lane as the target lane), and the decision making module 135 can also output the calculated target steering angle and/or target steering torque to a corresponding lateral execution module 137 to complete a steering action. Of course, the decision making module 135 can calculate the corresponding target steering angle and/or target steering torque when the current driving lane is selected as the target lane (such as receiving from the lane selection module 133 an instruction to select the current driving lane as the target lane), for example, calculating the target steering angle and/or target steering torque according to the distance of the vehicle from the left and right lane lines, the road curvature, etc. In this way, if there are multiple lanes in the same direction, a neighbouring lane in the same direction can be used to overtake; If dashed lines are provided between a reverse lane and this lane, a reverse neighbouring lane can also be used to overtake.

In order to improve the safety of lane change, the decision making module 135 can also output a corresponding turn light trigger signal when the corresponding neighbouring lane is selected as the target lane, and the turn light trigger signal can be output to other component or system to drive a left turn light or a right turn light to work, so that both the vehicle ahead and the vehicle behind can know in time a lane change intention of the host vehicle.

It should be noted that the specific calculation principle of the target steering angle and/or target steering torque is not restrictive, and can be implemented by using various calculation methods that are known or appear after the filing date of this application.

Continuing with what is shown in Fig. 1, the lateral control subsystem 130 is also internally provided with the alarm output module 139, which can be used to output an alarm signal, such as warning the driver of active intervention or withdrawal from an automatic driving function. The decision making module 135 can also be used to output the corresponding target steering angle and/or target steering torque according to lane line information (such as information of left and/or right lane lines) of the current lane when running in the current lane is kept.

In an example, if the signal processing module 131 determines that neither of left and right lane lines of the current lane exists based on the lane line information of the current lane, the decision making module 135 outputs a corresponding signal to trigger the alarm output module 139 to output an alarm signal, which indicates that it is relatively dangerous to keep running in the current lane for fully automatic driving at this time, and needs to warn the driver of active intervention and automatic withdrawal from an automatic driving function. The alarm signal can be specifically various sound signals, light signals or tactile signals (such as steering wheel shake or seat shake), etc.

In an example, if the signal processing module 131 determines that both left and right lane lines of the current lane exist (such as being clearly visible) based on the lane line information of the current lane, the decision making module 135 can output the corresponding target steering angle and/or target steering torque such that the host vehicle runs centrally along the current lane. During lane centering, the signal processing module 131 can continue to obtain the information of left and right lane lines of the current lane, and if the host vehicle approximately departs from the central position between the left and right lane lines of the current lane, the decision making module 135 can output a corresponding lane departure warning signal. The lane departure warning signal can be sent to, for example, the alarm output module 139, so as to timely remind the driver of intervening in a steering operation.

In an example, if the signal processing module 131 determines that one of left and right lane lines does not exist based on the lane line information of the current lane, the decision making module 135 can output the corresponding target steering angle and/or target steering torque such that the host vehicle runs along the current lane on the side where the lane line exists, thus being beneficial to ensure the safety of driving.

The automatic driving system of the above embodiment can automatically realize lateral control in an overtaking process, has good safety, and can also realize lateral control such as lane keeping, automatic lane change, etc., thereby improving the automation degree of the automatic driving system in terms of lateral control.

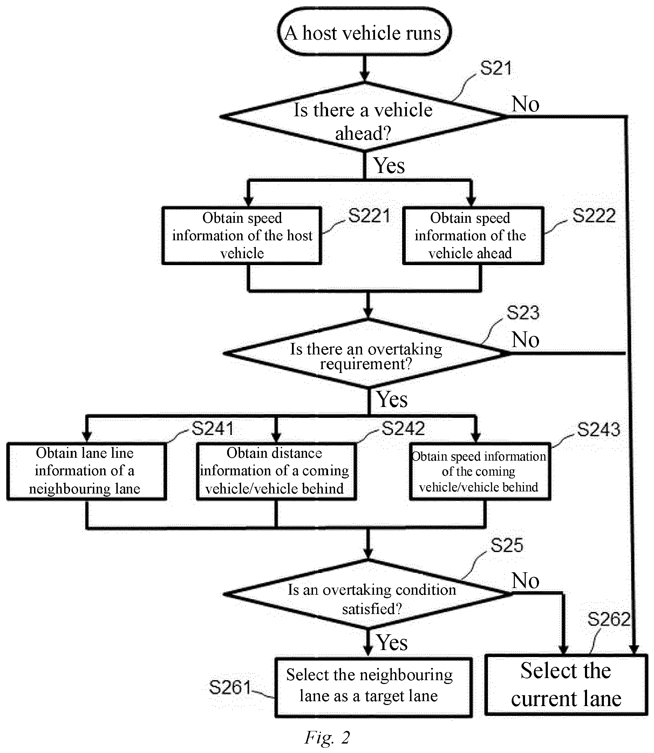

Fig. 2 shows a flowchart of a lateral control method of an automatic driving system according to an embodiment of the invention. The lateral control method according to the embodiment shown in Fig. 2 can be applied to the automatic driving system 10 shown in Fig. 1, which will be described below in detail with reference to Figs. 1 and 2.

When the host vehicle is running in a certain road and there is a vehicle ahead which is running in the same direction, the automatic driving system first determines whether there is a vehicle ahead in front of the host vehicle, i.e. step S21, and if the determination is "No", the current lane can be selected, i.e. step S262; and if the determination is "Yes", it is necessary to further determine whether there is an overtaking requirement, i.e. step S23.

In an embodiment, before step S23 is completed, step S221 and step S222 are further comprised, i.e. obtaining speed information V1 of the host vehicle (step S221) and speed information V2 of the vehicle ahead (step S222). Illustratively, the speed information V1 of the host vehicle can be obtained from the VCU 153, for example, and the speed information V2 of the vehicle ahead can be obtained by collecting data of the vehicle ahead via the image sensor 151 and/or the radar sensor 152 and performing signal processing via the signal processing module 131. The speed information V1 and V2 may include respective acceleration and magnitude of velocity.

In step S23, it can be determined whether there is an overtaking requirement according to the speed information V1 of the host vehicle and the speed information V2 of the vehicle ahead. Specifically, corresponding predetermined overtaking requirement conditions can be set according to parameters such as the speed information V1 and V2 and the distance information L2 between the host vehicle and the vehicle ahead, so that whether overtaking is required can be determined based on the predetermined overtaking requirement conditions. For example, if the speed of the vehicle ahead is lower than a certain threshold value and the speed of the host vehicle is greater than a certain threshold value, or the speed of the vehicle ahead relative to the host vehicle is lower than a certain threshold value, overtaking is considered to be required. The setting of the predetermined overtaking requirement conditions is to reflect the driver's overtaking requirement as accurately as possible, and the specific setting is not restrictive.

If the determination is "No", that is, there is no overtaking requirement, entering step S262, i.e. selecting the current lane, so as to follow the vehicle ahead and continue to keep running in the lane; and if the determination is "Yes", that is, there is an overtaking requirement, it is necessary to further determine whether the overtaking condition is satisfied, i.e. step S25.

In an embodiment, before step S24 is completed, step S241 is further comprised, i.e. obtaining lane line information of the neighbouring lane of the vehicle ahead. Illustratively, a lane line image of the neighbouring lane of the vehicle ahead can be collected by the image sensor 151 and is analyzed and processed by the signal processing module 131 to obtain a corresponding lane line image. If the lane line image is clearly visible, it indicates that there is a clear safe overtaking lane.

In an embodiment, before step S24 is completed, step S242 is further comprised, i.e. obtaining the distance information of the host vehicle relative to a coming vehicle which is running in an opposite direction to the host vehicle or the distance information of the host vehicle relative to a vehicle behind which is running in the same direction as the host vehicle. Illustratively, the image sensor 151 and/or the radar sensor 152, etc. can be used to collect distance information L3 of the coming vehicle and/or distance information L4 of the vehicle behind. If the distance information L3 and/or L4 is large enough, i.e. the coming vehicle and/or the vehicle behind is far enough, it indicates a safe overtaking lane distance.

In an embodiment, before step S24 is completed, step S243 can also be comprised, i.e. obtaining the speed information V3 of the coming vehicle/vehicle behind. Illustratively, the speed information V3 of the coming vehicle can be obtained by collecting data of the vehicle ahead via the image sensor 151 and/or the radar sensor 152 and performing signal processing via the signal processing module 131, and the speed information V4 of the vehicle behind can be obtained by collecting data of the vehicle ahead via the image sensor 151 and/or the radar sensor 152 and performing signal processing via the signal processing module 131. The speed information V3 of the coming vehicle and the speed information V4 of the vehicle behind may include magnitude of velocity and acceleration. If the magnitude of velocity of the coming vehicle/vehicle behind is suitable and the acceleration is small, it further indicates that there is a safe overtaking lane distance.

It should be understood that, the information obtained from the above steps S221, S222 and S241-S243 is dynamically changed in real time and needs to be continuously collected or calculated and updated. Moreover, the types of information obtained are not limited to the above embodiments, and other types of information may be selected and obtained according to specific needs.

In step S25, if it is determined that there is an overtaking requirement (i.e. the determination is "Yes" in step S23), whether an overtaking condition is satisfied is based on the lane line information of the neighbouring lane of the vehicle ahead and the distance information L3 of the coming vehicle and/or the distance information L4 of the vehicle behind, and if the overtaking condition is satisfied, the determination is "Yes", and the corresponding neighbouring lane (such as the neighbouring lane of the vehicle ahead) is selected as the target lane, i.e. entering step S261, otherwise continuing to select the current lane (such as the lane where the vehicle ahead and the host vehicle are currently travelling), i.e. entering step S262.

According to the invention, if the left and right lane lines of the neighbouring lane are invisible or partially missing, which indicates that the neighbouring lane is incomplete or the neighbouring lane is partially occupied by the vehicle ahead, it is determined that the overtaking condition is not satisfied. In another example, when there is no vehicle behind, for example, only if the lane line information of the neighbouring lane is clearly visible and the distance information L3 of the host vehicle relative to the coming vehicle is greater than or equal to the corresponding predetermined value, it is determined that the overtaking condition is satisfied, and if any of the above conditions is satisfied, it is determined that the overtaking condition is not satisfied. In yet another example, when a two-way lane is separated by an interval band (at this time, the coming vehicle may not be considered), for example, only if the lane line information of the neighbouring lane is clearly visible and the distance information L4 of the host vehicle relative to the vehicle behind is greater than or equal to the corresponding predetermined value, it is determined that the overtaking condition is satisfied, and if any of the above conditions is not satisfied, it is determined that the overtaking condition is not satisfied. In still another example, when there is the vehicle behind and a two-way lane is not separated by an interval band, for example, only if the lane line information of the neighbouring lane is clearly visible, the distance information L3 of the host vehicle relative to the coming vehicle is greater than or equal to the corresponding predetermined value, and the distance information L4 of the host vehicle relative to the vehicle behind is greater than or equal to the corresponding predetermined value, it is determined that the overtaking condition is satisfied, and if any of the above conditions is not satisfied, it is determined that the overtaking condition is not satisfied.

In step S25, whether an overtaking condition is satisfied is based on the speed information V3 of the coming vehicle and/or the speed information V4 of the vehicle behind, that is, if it is determined that there is the overtaking requirement, whether the overtaking condition is satisfied is based on the lane line information of the neighbouring lane of the vehicle ahead and the distance information L3 of the coming vehicle (a coming vehicle which is running in an opposite direction to the host vehicle) and speed information V3 thereof, and/or the distance information L4 of the vehicle behind (a vehicle behind which is running in the same direction as the host vehicle) and speed information V4 thereof, and if the overtaking condition is satisfied, the corresponding neighbouring lane is selected as the target lane.

In an example, when there is no vehicle behind, for example, only if the lane line information of the neighbouring lane is clearly visible, the distance information L3 of the host vehicle relative to the coming vehicle is greater than or equal to the corresponding predetermined value, and magnitude of velocity of the speed information V3 of the coming vehicle is less than or equal to the corresponding predetermined value, it is determined that the overtaking condition is satisfied, and if any of the above conditions is not satisfied, it is determined that the overtaking condition is not satisfied. In an example, when there is no vehicle behind, for example, only if the lane line information of the neighbouring lane is clearly visible, the distance information L3 of the host vehicle relative to the coming vehicle is greater than or equal to the corresponding predetermined value, and magnitude of velocity and acceleration of the speed information V3 of the coming vehicle are respectively less than or equal to the corresponding predetermined value, it is determined that the overtaking condition is satisfied, and if any of the above conditions is not satisfied, it is determined that the overtaking condition is not satisfied. In another example, when a two-way lane is separated by an interval band (at this time, the coming vehicle may not be considered), for example, only if the lane line information of the neighbouring lane of the vehicle ahead is clearly visible, the distance information L4 of the host vehicle relative to the vehicle behind is greater than or equal to the corresponding predetermined value, and magnitude of velocity and acceleration of the speed information V4 of the vehicle behind are respectively less than or equal to the corresponding predetermined value, it is determined that the overtaking condition is satisfied, and if any of the above conditions is not satisfied, it is determined that the overtaking condition is not satisfied. In yet another example, when there is the vehicle behind and a two-way lane is not separated by an interval band, for example, only if the lane line information of the neighbouring lane is clearly visible, the distance information L3 of the host vehicle relative to the coming vehicle is greater than or equal to the corresponding predetermined value, magnitude of velocity of the speed information V3 of the coming vehicle is less than or equal to the corresponding predetermined value, acceleration of the speed information V3 of the coming vehicle is less than or equal to the corresponding predetermined value, the distance information L4 of the host vehicle relative to the vehicle behind is greater than or equal to the corresponding predetermined value, magnitude of velocity of the speed information V4 of the vehicle behind is less than or equal to the corresponding predetermined value, acceleration of the speed information V4 of the coming vehicle is less than or equal to the corresponding predetermined value, it is determined that the overtaking condition is satisfied, and if any of the above conditions is not satisfied, it is determined that the overtaking condition is not satisfied.

Fig. 2 above shows the process of selecting a target lane during overtaking according to the lateral control method.

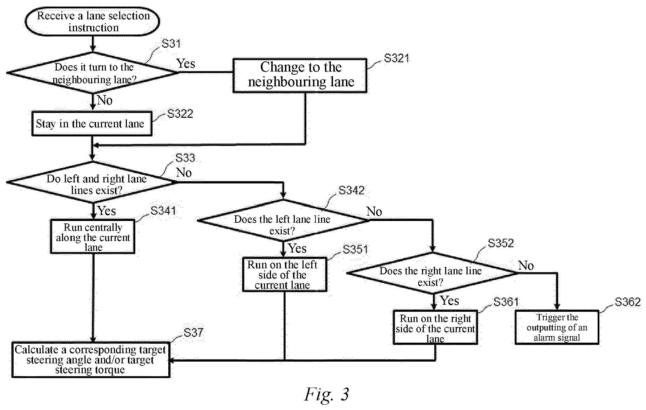

Fig. 3 shows a flowchart of a lateral control method of an automatic driving system according to another embodiment of the invention. The lateral control method according to the embodiment shown in Fig. 3 can be applied to the automatic driving system 10 shown in Fig. 1, which will be described in detail with reference to Fig. 1 and Fig. 3.

The lateral control method of the embodiment can include a lateral control process as shown in Fig. 2, which shows a control process after a lane selection instruction is received. First, according to the obtained selection instruction, whether it is necessary to turn to the neighbouring lane of the host vehicle is determined, i.e. step S31.

If the determination is "Yes", entering the step of making a decision to change to the neighbouring lane, i.e. step S321, and at this time, the target steering angle and/or target steering torque for changing to the neighbouring lane is calculated and output to complete the lateral control process of lane change. In an embodiment, in order to improve the safety of lane change, a corresponding turn light trigger signal can also be output when the corresponding neighbouring lane is selected as the target lane, and the turn light trigger signal can be output to other component or system to drive a left turn light or a right turn light to work, so that both the vehicle ahead and the vehicle behind can know in time a lane change intention of the host vehicle.

If the determination is "No", a decision to stay in the current lane is made, i.e. step S322, and at this time, the target steering angle and/or target steering torque for keeping running in the current lane is calculated and output.

Further, after the above step S321 or S322 is completed, in the process of keeping running in the current lane, lane line information of two sides of the current lane is further collected, and it is determined whether left and right lane lines of the current lane exist, i.e. step S33; if the determination is "Yes", a decision on lane centering can be made, i.e. step S341; and if the determination is "No", entering step S342, it is further determined whether the left lane line of the current lane exists.

If the determination in step S342 is "Yes", a decision to run on the left side of the current lane can be made, i.e. step S351; and if the determination in step S342 is "No", entering step S352, it is further determined whether the right lane line of the current lane exists.

If the determination in step S352 is "Yes", a decision to run on the right side of the current lane can be made, i.e. step S361; and if the determination in step S352 is "No", a decision to trigger the outputting of an alarm signal is made, i.e. step S362, so as to warn the driver of active intervention and automatic withdrawal from an automatic driving function.

After any of the decisions of the above steps S341, S351 and S361 is obtained, the corresponding target steering angle and/or target steering torque is calculated, i.e. step S37. The calculated target steering angle and/or target steering torque can be output to the lateral execution module 137 so as to respond to the execution of the above decisions.

In an embodiment, during lane centering, the information of left and right lane lines of the current lane can be continuously obtained, and if the host vehicle approximately departs from the central position between the left and right lane lines of the current lane, a corresponding lane departure warning signal can be output. The lane departure warning signal can be sent to, for example, the alarm output module 139, so as to timely remind the driver of intervening in a steering operation.

In an embodiment, whether there is an overtaking requirement for the coming vehicle is determined based on the distance information L4 of the host vehicle relative to a vehicle behind which is running in the same direction as the host vehicle and/or speed information of the vehicle behind relative to the host vehicle, and a warning signal indicating that a vehicle is coming from behind is generated if it is determined that there is an overtaking requirement. The warning signal indicating that a vehicle is coming from behind can be sent to the alarm output module 139.

In an example, it is determined that there is an overtaking requirement for the coming vehicle, if the distance information L4 of the host vehicle relative to the vehicle behind is less than a corresponding predetermined value, and magnitude of velocity of the speed information V4 of the vehicle behind is greater than or equal to the magnitude of velocity of the speed information V1 of the host vehicle, or acceleration of the speed information V4 of the vehicle behind is greater than acceleration of the speed information V1 of the host vehicle by the corresponding predetermined value. In this case, regardless of whether there is an overtaking requirement for the host vehicle, it is triggered to output the warning signal indicating that a vehicle is coming from behind. In this way, the alarm output module 139 timely reminds the driver of paying attention to the safety of the coming vehicle.

The lateral control method of the embodiment shown in Fig. 3 can further improve the safety and automation degree when running in the current lane is kept.

It should be understood that the automatic driving system 10 and the lateral control method thereof according to the above embodiments can be applied to various types of vehicles, especially electric vehicles, and are beneficial to improving the automatic driving experience.

It should be noted that the elements disclosed and described herein (including the flowcharts and block diagrams in the drawings) mean logical boundaries between the elements. However, according to software or hardware engineering practices, the depicted elements and functions thereof can be executed on a machine by a computer-executable medium, wherein computer-executable medium has a processor capable of executing program instructions stored thereon, the program instruction serves as a single piece of software structure, an independent software module or as a module using external programs, codes, services, etc., or any combination of these, and all of these execution schemes may fall within the scope of the claims.

Although different non-limiting embodiments have specifically illustrated components, embodiments of the invention are not limited to these specific combinations.

## Claims

1. A lateral control method of an automatic driving system (10), **characterized by** comprising steps of:
determining whether there is an overtaking requirement according to first speed information of a host vehicle of the automatic driving system (10) and second speed information of a vehicle ahead which is running in the same direction with the host vehicle;
determining, when it is determined that there is the overtaking requirement, whether an overtaking condition is satisfied based on lane line information of a neighbouring lane of the vehicle ahead, and distance information of the host vehicle relative to a coming vehicle which is running in an opposite direction to the host vehicle and/or distance information of the host vehicle relative to a vehicle behind which is running in the same direction as the host vehicle; and
selecting a corresponding neighbouring lane as a target lane when the overtaking condition is satisfied,
wherein whether the overtaking condition is satisfied is further determined based on third speed information of a coming vehicle and/or fourth speed information of the vehicle behind, **characterized in that** it is determined that the overtaking condition is not satisfied when left and right lane lines of the neighboring lane are invisible or partially missing.

2. The lateral control method according to claim 1, **characterized by** further comprising a step of: calculating a corresponding target steering angle and/or target steering torque when the corresponding neighbouring lane is selected as the target lane.

3. The lateral control method according to claim 2, **characterized in that** a corresponding turn light trigger signal is output when the corresponding neighbouring lane is selected as the target lane.

4. The lateral control method according to claim 2, **characterized by** further comprising steps of:
selecting the current lane as the target lane when the overtaking condition is not satisfied; and
outputting the target steering angle and/or target steering torque for keeping running in the current lane when the current lane is selected as the target lane.

5. The lateral control method according to claim 4, **characterized in that** the corresponding target steering angle and/or target steering torque is output according to lane line information of the current lane when running in the current lane is kept, in the step of outputting the target steering angle and/or target steering torque for keeping running in the current lane.

6. The lateral control method according to claim 5, **characterized by** further comprising a step of: outputting a corresponding signal to trigger the outputting of an alarm signal when running in the current lane is kept and neither of left and right lane lines of the current lane exists.

7. The lateral control method according to claim 5, **characterized in that** the step of outputting the target steering angle and/or target steering torque for keeping running in the current lane comprises:
outputting the corresponding target steering angle and/or target steering torque when running in the current lane is kept and both left and right lane lines of the current lane exist such that the host vehicle runs centrally along the current lane; and/or
outputting the corresponding target steering angle and/or target steering torque when running in the current lane is kept and one of left and right lane lines of the current lane does not exist such that the host vehicle runs along the current lane on the side where the lane line exists.

8. The lateral control method according to claim 7, **characterized in that** a corresponding lane departure warning signal is outputted if the host vehicle approximately departs from the central position between the left and right lane lines of the current lane as the host vehicle runs centrally along the current lane.

9. The lateral control method according to claim 1, **characterized by** further comprising a step of: determining whether there is the vehicle ahead, and if it is determined that there is the vehicle ahead, obtaining the first speed information and the second speed information, and/or third speed information of the coming vehicle and fourth speed information of the vehicle behind.

10. The lateral control method according to claim 1, **characterized in that** in the step of determining whether the overtaking condition is satisfied, it is determined that the overtaking condition is satisfied at least when left and right lane lines of the neighbouring lane are clearly visible and distance information of the coming vehicle is greater than or equal to a corresponding predetermined value and/or distance information of the vehicle behind is greater than or equal to a corresponding predetermined value, otherwise it is determined that the overtaking condition is not satisfied.

11. The lateral control method according to claim 1, **characterized in that** in the step of determining whether the overtaking condition is satisfied, it is determined that the overtaking condition is satisfied at least when left and right lane lines of the neighbouring lane are clearly visible, distance information of the coming vehicle is greater than or equal to a corresponding predetermined value and a magnitude of velocity and an acceleration of the third speed information of the coming vehicle are both less than or equal to corresponding predetermined values, and distance information of the vehicle behind is greater than or equal to a corresponding predetermined value and a magnitude of velocity and an acceleration of the fourth speed information of the vehicle behind are both less than or equal to corresponding predetermined values, otherwise it is determined that the overtaking condition is not satisfied.

12. The lateral control method according to claim 1, **characterized by** further comprising a step of:
determining whether there is an overtaking requirement for a vehicle behind based on the distance information of the host vehicle relative to a vehicle behind which is running in the same direction as the host vehicle and/or speed information of the vehicle behind relative to the host vehicle, and generating a warning signal indicating that a vehicle is coming from behind if it is determined that there is an overtaking requirement.

13. The lateral control method according to claim 12, **characterized in that** it is determined that there is an overtaking requirement for a coming vehicle at least when the distance information of the host vehicle relative to the vehicle behind is less than or equal to a corresponding predetermined value, and a magnitude of velocity of fourth speed information of the vehicle behind is greater than or equal to a magnitude of velocity of the first speed information of the host vehicle or an acceleration of the fourth speed information of the vehicle behind is greater than an acceleration of the first speed information of the host vehicle by a corresponding predetermined value.

14. The lateral control method according to claim 1, **characterized in that** the first speed information, the second speed information, the third speed information and the fourth speed information all include a magnitude of velocity and an acceleration.

## Patentansprüche

1. Quersteuerungsverfahren eines automatischen Fahrsystems (10), **dadurch gekennzeichnet, dass** es folgende Schritte umfasst:
Bestimmen, ob ein Überholbedarf besteht, gemäß ersten Geschwindigkeitsinformationen eines Trägerfahrzeugs des automatischen Fahrsystems (10) und zweiten Geschwindigkeitsinformationen eines Fahrzeugs vor ihm, das in derselben Richtung wie das Trägerfahrzeug fährt;
Bestimmen, wenn bestimmt worden ist, dass der Überholbedarf besteht, ob eine Überholbedingung erfüllt ist, basierend auf Fahrbahnlinien-Informationen einer Nachbarspur des vorausfahrenden Fahrzeugs und Abstandsinformationen des Trägerfahrzeugs bezüglich eines sich nähernden Fahrzeugs, das in einer zu dem Trägerfahrzeug entgegengesetzten Richtung fährt, und/oder Abstandsinformationen des Trägerfahrzeugs bezüglich eines nachfolgenden Fahrzeugs, das in derselben Richtung wie das Trägerfahrzeug fährt; und
Wählen einer entsprechenden Nachbarspur als Zielspur, wenn die Überholbedingung erfüllt ist,
wobei, ob die Überholbedingung erfüllt ist, ferner basierend auf dritten Geschwindigkeitsinformationen eines sich nähernden Fahrzeugs und/oder vierten Geschwindigkeitsinformationen des nachfolgenden Fahrzeugs bestimmt wird, **dadurch gekennzeichnet, dass** bestimmt wird, dass die Überholbedingung nicht erfüllt ist, wenn die linke und die rechte Fahrbahnlinie der Nachbarspur unsichtbar sind oder teilweise fehlen.

2. Quersteuerungsverfahren nach Anspruch 1, **dadurch gekennzeichnet, dass** es ferner folgenden Schritt umfasst: Berechnen eines entsprechenden Ziellenkwinkels und/oder Ziellenkmoments, wenn die entsprechende Nachbarspur als Zielspur gewählt wird.

3. Quersteuerungsverfahren nach Anspruch 2, **dadurch gekennzeichnet, dass** ein entsprechendes Blinkleuchten-Auslösesignal ausgegeben wird, wenn die entsprechende Nachbarspur als Zielspur gewählt wird.

4. Quersteuerungsverfahren nach Anspruch 2, **dadurch gekennzeichnet, dass** es ferner folgende Schritte umfasst:
Wählen der aktuellen Spur als Zielspur, wenn die Überholbedingung nicht erfüllt ist; und
Ausgeben des Ziellenkwinkels und/oder Ziellenkmoments zum Weiterfahren in der aktuellen Spur, wenn die aktuelle Spur als Zielspur gewählt wird.

5. Quersteuerungsverfahren nach Anspruch 4, **dadurch gekennzeichnet, dass** der entsprechende Ziellenkwinkel und/oder das entsprechende Ziellenkmoment gemäß Fahrbahnlinien-Informationen der aktuellen Spur ausgegeben werden, wenn im Schritt des Ausgebens des Ziellenkwinkels und/oder Ziellenkmoments zum Weiterfahren in der aktuellen Spur in der aktuellen Spur weitergefahren wird.

6. Quersteuerungsverfahren nach Anspruch 5, **dadurch gekennzeichnet, dass** es ferner folgenden Schritt umfasst: Ausgeben eines entsprechenden Signals, um das Ausgeben eines Alarmsignals auszulösen, wenn in der aktuellen Spur weitergefahren wird und weder eine linke noch eine rechnete Fahrbahnlinie der aktuellen Spur existiert.

7. Quersteuerungsverfahren nach Anspruch 5, **dadurch gekennzeichnet, dass** der Schritt des Ausgebens des Ziellenkwinkels und/oder Ziellenkmoments zum Weiterfahren in der aktuellen Spur umfasst:
Ausgeben des entsprechenden Ziellenkwinkels und/oder Ziellenkmoments, wenn in der aktuellen Spur weitergefahren wird und sowohl eine linke als auch eine rechnete Fahrbahnlinie der aktuellen Spur existieren, so dass das Trägerfahrzeug mittig entlang der aktuellen Spur fährt; und/oder
Ausgeben des entsprechenden Ziellenkwinkels und/oder Ziellenkmoments, wenn in der aktuellen Spur weitergefahren wird und eine von der linken und der rechten Fahrbahnlinie der aktuellen Spur nicht existiert, so dass das Trägerfahrzeug entlang der aktuellen Spur auf der Seite fährt, wo die Fahrbahnlinie existiert.

8. Quersteuerungsverfahren nach Anspruch 7, **dadurch gekennzeichnet, dass** ein entsprechendes Spurverlassens-Warnsignal ausgegeben wird, falls das Trägerfahrzeug demnächst die mittlere Position zwischen der linken und der rechten Fahrbahnlinie der aktuellen Spur verlässt, wenn das Trägerfahrzeug mittig entlang der aktuellen Spur fährt.

9. Quersteuerungsverfahren nach Anspruch 1, **dadurch gekennzeichnet, dass** es ferner folgenden Schritt umfasst: Bestimmen, ob das vorausfahrende Fahrzeug vorhanden ist, und falls bestimmt wird, dass das vorausfahrende Fahrzeug vorhanden ist, Gewinnen der ersten Geschwindigkeitsinformationen und der zweiten Geschwindigkeitsinformationen und/oder dritter Geschwindigkeitsinformationen des sich nähernden Fahrzeugs und vierter Geschwindigkeitsinformationen des nachfolgenden Fahrzeugs.

10. Quersteuerungsverfahren nach Anspruch 1, **dadurch gekennzeichnet, dass** im Schritt des Bestimmens, ob die Überholbedingung erfüllt ist, bestimmt wird, dass die Überholbedingung erfüllt ist, wenn wenigstens die linke und die rechte Fahrbahnlinie der Nachbarspur deutlich sichtbar sind und Abstandsinformationen des sich nähernden Fahrzeugs größer oder gleich einem entsprechenden vorbestimmten Wert sind und/oder Abstandsinformationen des nachfolgenden Fahrzeugs größer oder gleich einem entsprechenden vorbestimmten Wert sind, und andernfalls bestimmt wird, dass die Überholbedingung nicht erfüllt ist.

11. Quersteuerungsverfahren nach Anspruch 1, **dadurch gekennzeichnet, dass** im Schritt des Bestimmens, ob die Überholbedingung erfüllt ist, bestimmt wird, dass die Überholbedingung erfüllt ist, wenn wenigstens die linke und die rechte Fahrbahnlinie der Nachbarspur deutlich sichtbar sind, Abstandsinformationen des sich nähernden Fahrzeugs größer oder gleich einem entsprechenden vorbestimmten Wert sind und ein Betrag der Geschwindigkeit und eine Beschleunigung der dritten Geschwindigkeitsinformationen des sich nähernden Fahrzeugs beide kleiner oder gleich entsprechenden vorbestimmten Werten sind und Abstandsinformationen des nachfolgenden Fahrzeugs größer oder gleich einem entsprechenden vorbestimmten Wert sind und ein Betrag der Geschwindigkeit und eine Beschleunigung der vierten Geschwindigkeitsinformationen des nachfolgenden Fahrzeugs beide kleiner oder gleich entsprechenden vorbestimmten Werten sind, und andernfalls bestimmt wird, dass die Überholbedingung nicht erfüllt ist.

12. Quersteuerungsverfahren nach Anspruch 1, **dadurch gekennzeichnet, dass** es ferner folgenden Schritt umfasst:
Bestimmen, ob ein Überholbedarf für ein nachfolgendes Fahrzeug besteht, basierend auf den Abstandsinformationen des Trägerfahrzeugs bezüglich eines nachfolgenden Fahrzeugs, das in derselben Richtung wie das Trägerfahrzeug fährt, und/oder Geschwindigkeitsinformationen des nachfolgenden Fahrzeugs bezüglich des Trägerfahrzeugs, und Erzeugen eines Warnsignals, das anzeigt, dass ein Fahrzeug von hinten kommt, falls bestimmt wird, dass ein Überholbedarf besteht.

13. Quersteuerungsverfahren nach Anspruch 12, **dadurch gekennzeichnet, dass** bestimmt wird, dass ein Überholbedarf für ein sich näherndes Fahrzeug besteht, wenn die Abstandsinformationen des Trägerfahrzeugs bezüglich des nachfolgenden Fahrzeugs kleiner oder gleich einem entsprechenden vorbestimmten Wert sind und ein Betrag der Geschwindigkeit vierter Geschwindigkeitsinformationen des nachfolgenden Fahrzeugs größer oder gleich einem Betrag der Geschwindigkeit der ersten Geschwindigkeitsinformationen des Trägerfahrzeugs ist oder eine Beschleunigung der vierten Geschwindigkeitsinformationen des nachfolgenden Fahrzeugs um einen entsprechenden vorbestimmten Wert größer als eine Beschleunigung der ersten Geschwindigkeitsinformationen des Trägerfahrzeugs ist.

14. Quersteuerungsverfahren nach Anspruch 1, **dadurch gekennzeichnet, dass** die ersten Geschwindigkeitsinformationen, die zweiten Geschwindigkeitsinformationen, die dritten Geschwindigkeitsinformationen und die vierten Geschwindigkeitsinformationen alle einen Betrag der Geschwindigkeit und eine Beschleunigung enthalten.

## Revendications

1. Procédé de contrôle latéral d'un système de conduite automatique (10), **caractérisé en ce qu'**il comprend les étapes suivantes :
la détermination du fait qu'il y a, ou il n'y a pas, une nécessité de dépassement selon des premières informations de vitesse d'un véhicule hôte du système de conduite automatique (10) et des deuxièmes informations de vitesse d'un véhicule devant, qui est en déplacement dans la même direction que le véhicule hôte ;
la détermination, lorsqu'il est déterminé qu'il y a la nécessité de dépassement, du fait qu'une condition de dépassement est, ou n'est pas, respectée sur la base d'informations de lignes de voie d'une voie voisine du véhicule devant, et d'informations de distance du véhicule hôte relativement à un véhicule arrivant qui est en déplacement dans une direction opposée à celle du véhicule hôte et/ou d'informations de distance du véhicule hôte relativement à un véhicule derrière qui est en déplacement dans la même direction que le véhicule hôte ; et
la sélection d'une voie voisine correspondante en tant que voie cible lorsque la condition de dépassement est respectée,
dans lequel le fait que la condition de dépassement est, ou n'est pas, respectée est en outre déterminé sur la base de troisièmes informations de vitesse d'un véhicule arrivant et/ou de quatrièmes informations de vitesse du véhicule derrière, **caractérisé en ce qu'**il est déterminé que la condition de dépassement n'est pas respectée lorsque des lignes de voie gauche et droite de la voie voisine sont invisibles ou partiellement manquantes.

2. Procédé de contrôle latéral selon la revendication 1, **caractérisé en ce qu'**il comprend en outre une étape suivante : le calcul d'un angle de braquage cible et/ou d'un couple de braquage cible correspondants lorsque la voie voisine correspondante est sélectionnée en tant que voie cible.

3. Procédé de contrôle latéral selon la revendication 2, **caractérisé en ce qu'**un signal de déclenchement de clignotant correspondant est sorti lorsque la voie voisine correspondante est sélectionnée en tant que voie cible.

4. Procédé de contrôle latéral selon la revendication 2, **caractérisé en ce qu'**il comprend en outre étapes suivantes :
la sélection de la voie actuelle en tant que voie cible lorsque la condition de dépassement n'est pas respectée ; et
la sortie de l'angle de braquage cible et/ou du couple de braquage cible pour maintenir le déplacement dans la voie actuelle lorsque la voie actuelle est sélectionnée en tant que voie cible.

5. Procédé de contrôle latéral selon la revendication 4, **caractérisé en ce que** l'angle de braquage cible et/ou le couple de braquage cible correspondants sont sortis selon des informations de lignes de voie de la voie actuelle lorsque le déplacement dans la voie actuelle est maintenu, dans l'étape de la sortie de l'angle de braquage cible et/ou du couple de braquage cible pour maintenir le déplacement dans la voie actuelle.

6. Procédé de contrôle latéral selon la revendication 5, **caractérisé en ce qu'**il comprend en outre une étape suivante : la sortie d'un signal correspondant pour déclencher la sortie d'un signal d'alarme lorsque le déplacement dans la voie actuelle est maintenu et ni l'une ni l'autre des lignes de voie gauche et droite de la voie actuelle n'existe.

7. Procédé de contrôle latéral selon la revendication 5, **caractérisé en ce que** l'étape de la sortie de l'angle de braquage cible et/ou du couple de braquage cible pour maintenir le déplacement dans la voie actuelle comprend :
la sortie de l'angle de braquage cible et/ou du couple de braquage cible correspondants lorsque le déplacement dans la voie actuelle est maintenu et les deux des lignes de voie gauche et droite de la voie actuelle existent, de manière telle que le véhicule hôte se déplace centralement le long de la voie actuelle ; et/ou
la sortie de l'angle de braquage cible et/ou du couple de braquage cible correspondants lorsque le déplacement dans la voie actuelle est maintenu et une des lignes de voie gauche et droite de la voie actuelle n'existe pas, de manière telle que le véhicule hôte se déplace le long de la voie actuelle sur le côté où la ligne de voie existe.

8. Procédé de contrôle latéral selon la revendication 7, **caractérisé en ce qu'**un signal d'avertissement d'abandon de voie correspondant est sorti si le véhicule hôte abandonne approximativement la position centrale entre les lignes de voie gauche et droite de la voie actuelle quand le véhicule hôte se déplace centralement le long de la voie actuelle.

9. Procédé de contrôle latéral selon la revendication 1, **caractérisé en ce qu'**il comprend en outre une étape suivante : la détermination du fait qu'il y a, ou il n'y a pas, le véhicule devant, et s'il est déterminé qu'il y a le véhicule devant, l'obtention des premières informations de vitesse et des deuxièmes informations de vitesse, et/ou de troisièmes informations de vitesse du véhicule arrivant et de quatrièmes informations de vitesse du véhicule derrière.

10. Procédé de contrôle latéral selon la revendication 1, **caractérisé en ce que**, dans l'étape de la détermination du fait que la condition de dépassement est, ou n'est pas, respectée, il est déterminé que la condition de dépassement est respectée au moins lorsque des lignes de voie gauche et droite de la voie voisine sont clairement visibles et des informations de distance du véhicule arrivant sont supérieures ou égales à une valeur prédéterminée correspondante et/ou des informations de distance du véhicule derrière sont supérieures ou égales à une valeur prédéterminée correspondante, autrement il est déterminé que la condition de dépassement n'est pas respectée.

11. Procédé de contrôle latéral selon la revendication 1, **caractérisé en ce que**, dans l'étape de la détermination du fait que la condition de dépassement est, ou n'est pas, respectée, il est déterminé que la condition de dépassement est respectée au moins lorsque des lignes de voie gauche et droite de la voie voisine sont clairement visibles, des informations de distance du véhicule arrivant sont supérieures ou égales à une valeur prédéterminée correspondante et une amplitude de vélocité et une accélération des troisièmes informations de vitesse du véhicule arrivant sont toutes les deux inférieures ou égales à des valeurs prédéterminées correspondantes, et des informations de distance du véhicule derrière sont supérieures ou égales à une valeur prédéterminée correspondante et une amplitude de vélocité et une accélération des quatrièmes informations de vitesse du véhicule derrière sont toutes les deux inférieures ou égales à des valeurs prédéterminées correspondantes, autrement il est déterminé que la condition de dépassement n'est pas respectée.

12. Procédé de contrôle latéral selon la revendication 1, **caractérisé en ce qu'**il comprend en outre une étape suivante :
la détermination du fait qu'il y a, ou il n'y a pas, une nécessité de dépassement pour un véhicule derrière sur la base des informations de distance du véhicule hôte relativement à un véhicule derrière qui est en déplacement dans la même direction que le véhicule hôte et/ou d'informations de vitesse du véhicule derrière relativement au véhicule hôte, et la génération d'un signal d'avertissement indiquant qu'un véhicule arrive de derrière s'il est déterminé qu'il y a une nécessité de dépassement.

13. Procédé de contrôle latéral selon la revendication 12, **caractérisé en ce qu'**il est déterminé qu'il y a une nécessité de dépassement pour un véhicule arrivant au moins lorsque les informations de distance du véhicule hôte relativement au véhicule derrière sont inférieures ou égales à une valeur prédéterminée correspondante, et une amplitude de vélocité de quatrièmes informations de vitesse du véhicule derrière est supérieure ou égale à une amplitude de vélocité des premières informations de vitesse du véhicule hôte ou une accélération des quatrièmes informations de vitesse du véhicule derrière est supérieure, d'une valeur prédéterminée correspondante, à une accélération des premières informations de vitesse du véhicule hôte.

14. Procédé de contrôle latéral selon la revendication 1, **caractérisé en ce que** les premières informations de vitesse, les deuxièmes informations de vitesse, les troisièmes informations de vitesse, et les quatrièmes informations de vitesse incluent toutes une amplitude de vélocité et une accélération.
